# FASCICULE DE BREVET EUROPEEN

(11) **EP 3 320 394 B1**
(45) Date de publication et mention de la délivrance du brevet: **02.09.2020**
(21) Numéro de dépôt: 16744820.8
(22) Date de dépôt: 08.07.2016
(51) Int. Cl.: G02F 1/161, G02C 7/10

(54) **DISPOSITIF OPHTALMIQUE COMPRENANT UNE CELLULE ÉLECTROCHROME**
OPHTHALMISCHE VORRICHTUNG MIT EINER ELEKTROCHROMEN ZELLE
OPHTHALMIC DEVICE WITH AN ELECTROCHROMIC CELL

(30) Priorité: 10.07.2015 FR 1556626
(43) Date de publication de la demande: 16.05.2018
(73) Titulaire: Essilor International (Compagnie Générale d'Optique), 94220 Charenton-le-Pont (FR)
(72) Inventeur: BALLET, Jérôme, 94227 Charenton Le Pont Cedex (FR); ARCHAMBEAU, Samuel, 94227 Charenton Le Pont Cedex (FR); CANO, Jean-Paul, 94227 Charenton Le Pont Cedex (FR); BIVER, Claudine, 94227 Charenton Le Pont Cedex (FR); VINSONNEAU, Sylvie, 94227 Charenton Le Pont Cedex (FR); ESCAICH, David, 94227 Charenton Le Pont Cedex (FR); PERROT, Stéphane, 94227 Charenton Le Pont Cedex (FR); BERIT DEBAT, Fabien, 94227 Charenton Le Pont Cedex (FR); LUSSAGNET, Jean-Jacques, 94227 Charenton Le Pont Cedex (FR)
(74) Mandataire: Plasseraud IP
(86) Numéro de dépôt international: PCT/FR2016/051765
(87) Numéro de publication internationale: WO 2017/009563

(56) Documents cités:
- EP-A1- 2 848 669
- EP-A2- 1 962 133
- US-A- 5 790 298
- US-A1- 2001 006 430
- US-A1- 2003 052 838
- US-A1- 2009 095 408
- US-A1- 2013 278 989

## Description

L'invention concerne un dispositif ophtalmique comprenant une cellule électrochrome et un procédé d'assemblage d'une telle cellule.

Une cellule électrochrome a typiquement une structure comportant deux couches extérieures transparentes planes, par exemple deux surfaces en matériau organique ou minéral, sur lesquelles des revêtements électroconducteurs transparents sont déposés sur leurs faces internes. Une composition électrochrome remplie une cavité formée entre les deux revêtements électroconducteurs. Il est ainsi possible de faire varier la valeur de transmission à la lumière de la cellule en appliquant un champ électrique entre les revêtements électroconducteurs.

Le maintien des deux couches extérieures transparentes et la fermeture de la cavité est réalisée au moyen d'un joint de scellement périphérique.

Il est connu d'utiliser un joint de scellement ayant une largeur importante afin d'assurer un maintien satisfaisant des deux couches transparentes entre elles ainsi qu'une rigidité suffisante de la cellule électrochrome.

Toutefois, un joint d'étanchéité périphérique de grande largeur peut s'avérer problématique dans le cas d'un dispositif ophtalmique, celui-ci risquant d'entrainer une diminution du champ utile de la cellule et de dégrader le confort visuel du porteur.

Afin d'assurer un espacement constant entre les deux couches extérieures transparentes, il est également connu de placer des éléments d'espacements au centre de la cavité. Ces éléments d'espacements viennent alors en contact avec les deux couches extérieures et permettent ainsi de maintenir une épaisseur stable entre les deux couches extérieures formant la cavité de la cellule.

Toutefois, de tels éléments d'espacement peuvent être visibles par le porteur du dispositif, et en particulier entrainer l'apparition de points blancs ou de points diffusants au milieu de la cellule qui peuvent se révéler être particulièrement inesthétiques, lorsque leur dimension est supérieure à quelques micromètres, et peuvent gêner la vision du porteur.

L'invention vise à résoudre au moins partiellement les inconvénients exposés ci-dessus et, plus particulièrement, vise à obtenir une cellule électrochrome ayant une bonne résistance mécanique et comprenant notamment un joint de scellement de faible largeur.

Ainsi, la présente invention concerne un dispositif ophtalmique comportant une cellule électrochrome comprenant au moins deux couches transparentes ayant des faces internes incurvées et délimitant entre elles une cavité fermée remplie par une composition électrochrome, la cavité étant délimitée en périphérie par un joint de scellement formé à partir d'un matériau adhésif réticulé, le joint de scellement étant adapté pour maintenir les deux couches transparentes assemblées l'une avec l'autre.

Une telle cellule formée à partir de couches transparentes ayant des faces internes incurvées, et non planes, présente une meilleure rigidité et permet de mieux s'adapter aux formes d'une monture dans laquelle la cellule 3 peut être montée. La cellule électrochrome est ainsi suffisamment solide tout en utilisant un joint de scellement de largeur contrôlée. Il est également possible d'éviter de placer des éléments d'espacements au centre de la cellule.

Cela permet également de garantir l'étanchéité de la cavité remplie de la composition électrochrome.

Selon une réalisation, les couches transparentes sont des lentilles ophtalmiques respectant, avec la composition électrochrome de la cavité, une prescription ophtalmique d'un porteur du dispositif.

Selon une réalisation, le joint de scellement a une hauteur comprise entre 40 micromètres et 200 micromètres.

Selon une réalisation, le joint de scellement est réalisé avec une résine époxy à amorçage cationique.

Selon une réalisation, le joint de scellement contient des éléments d'espacement adaptés pour assurer un écartement entre les deux couches transparentes assemblées par le joint de scellement et formant la cavité.

Selon une réalisation, la cavité a une épaisseur constante entre les deux faces internes des couches transparentes.

Selon une réalisation, la cavité a une épaisseur variable entre les deux faces internes des couches transparentes. Cela permet de réaliser un gradient de transmission au sein de la cellule ou de compenser une faible conductivité de la part des revêtements électroconducteurs.

Selon une réalisation, les faces internes des couches transparentes sont chacune intégralement recouverte par un revêtement conducteur.

Selon une réalisation, le revêtement conducteur de chacune des faces internes est réalisé en oxyde d'indium dopé à l'étain (ITO).

Selon une réalisation, un élément de connexion est disposé en périphérie tout autour de chacune des couches transparentes et relié électriquement à chacun des revêtements conducteurs, le joint de scellement étant disposé de façon à isoler de façon étanche chacun des éléments de connexion de la cavité.

Selon une réalisation, le dispositif comporte un circuit de commande disposé entre les éléments de connexion et relié électriquement à chacun des éléments de connexion, le joint de scellement étant disposé de façon à isoler de façon étanche le circuit de commande de la cavité.

Selon une réalisation, le dispositif comporte un élément intermédiaire conducteur comprenant une première extrémité disposée en périphérie de la cellule et reliée électriquement à chacun des éléments de connexion, l'élément intermédiaire conducteur comprenant une deuxième extrémité reliée électriquement à un circuit de commande, le joint de scellement étant disposé de façon à isoler de façon étanche l'élément intermédiaire conducteur et la cavité.

L'invention concerne également un procédé d'assemblage d'une cellule électrochrome d'un dispositif ophtalmique, comprenant deux couches transparentes, les couches transparentes comprenant des faces internes incurvées délimitant entre elles une cavité fermée destinée à être remplie par une composition électrochrome, la cavité étant délimitée en périphérie par un joint de scellement formé à partir d'un matériau adhésif, le joint de scellement étant adapté pour maintenir les deux couches transparentes assemblées l'une avec l'autre, le procédé comprenant les étapes consistant à déposer un matériau adhésif sur la périphérie de la face interne d'une des couches transparentes, assembler les faces internes des deux couches transparentes au moyen d'un dispositif de maintien de sorte à former la cavité; et réticuler le matériau adhésif par un traitement par exposition à la lumière et/ou par un traitement thermique afin de former le joint de scellement.

Selon une réalisation, le traitement par exposition à la lumière est un traitement à la lumière visible ou ultraviolette.

Selon une réalisation, dans l'étape de dépôt, le matériau adhésif est déposé partiellement sur la périphérie de la face interne d'une des couches transparentes de sorte à former, une fois les faces internes des deux couches transparentes assemblées, au moins une ouverture de remplissage dans le matériau adhésif débouchant dans la cavité ; après assemblage des faces internes des deux couches transparentes, la cavité est remplie avec la composition électrochrome par l'ouverture de remplissage ; après remplissage, l'ouverture de remplissage est bouchée puis recouverte avec le matériau adhésif formant le joint de scellement.

D'autres caractéristiques et avantages de la présente invention apparaîtront dans la description détaillée suivante, se référant aux dessins annexés dans lesquels :
- La figure 1 est une vue en perspective d'un dispositif ophtalmique selon l'invention ;
- La figure 2A est une vue de face d'une cellule électrochrome de la figure 1 ;
- La figure 2B est une vue schématique en coupe selon le plan IIB-IIB de la figure 2A ;
- La figure 3 est une vue de face d'une cellule électrochrome reliée à un circuit de commande par un élément intermédiaire conducteur ;
- La figure 4 est une vue schématique en coupe d'une cellule électrochrome dans lequel un circuit de commande est disposé directement entre deux éléments de connexion ;
- La figure 5 est une vue schématique des différentes étapes du procédé d'assemblage selon l'invention ;
- La figure 6 est une vue schématique du matériau adhésif déposé sur une couche transparente lors de l'étape de dépôt du procédé d'assemblage ; et
- La figure 7 est une vue de côté des deux couches transparentes maintenues par un dispositif de maintien lors de l'étape d'assemblage du procédé d'assemblage.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Par souci de clarté, seuls les éléments utiles à la compréhension des modes de réalisation décrits ont été représentés et seront détaillés.

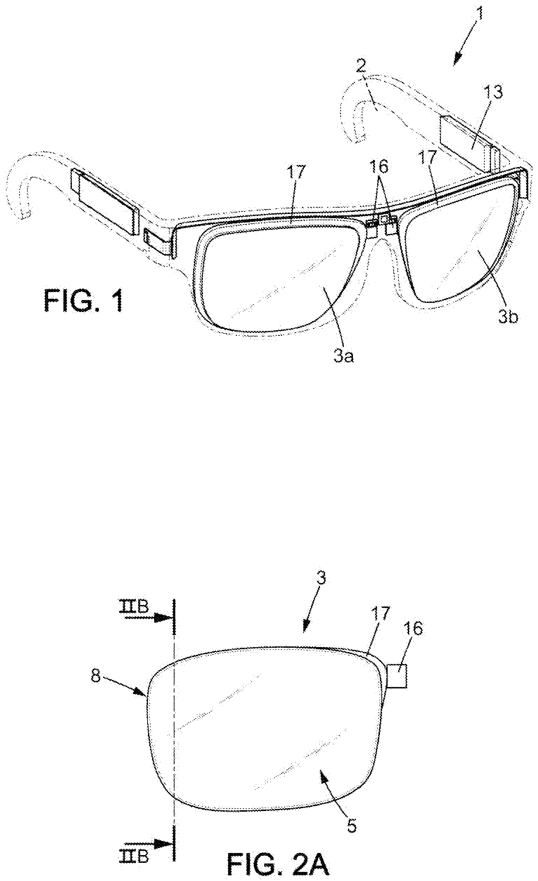

La figure 1 représente un dispositif ophtalmique 1 selon l'invention.

Selon la réalisation représentée sur la figure 1, le dispositif ophtalmique 1 comprend une monture 2, dans laquelle sont montées deux cellules électrochromes 3a, 3b.

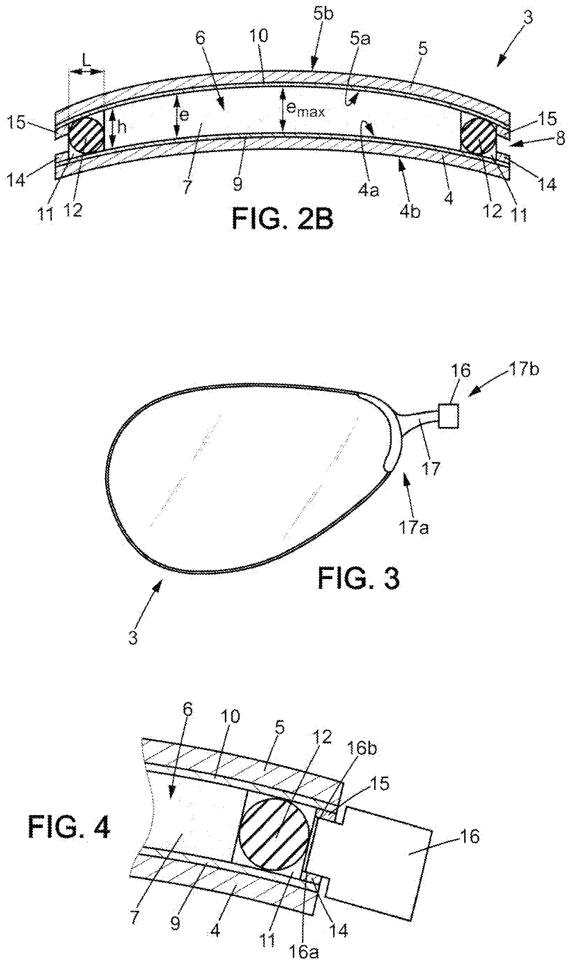

Comme représentée sur la figure 2B, une cellule électrochrome 3 comprend deux couches transparentes 4, 5, avantageusement non conductrices, délimitant entre elles une cavité 6 destinée à être remplie par une composition électrochrome 7. La composition électrochrome peut par exemple être une solution comprenant un solvant tel que du propylène carbonate, un agent épaississant tel que du polyméthacrylate de méthyle, des agents oxydants tels que du 1,1'-bis(3-(tert-butyl)phenyl)-[4,4'-bipyridine]-1,1'-diium) bis tetrafluoroborate et du 1,1'-bis(3-(tert-butyl)phenyl)-[4,4'-bipyridine]-1,1'-diium) bis tetrafluoroborate, un agent réducteur tel que du 10-Methylphenothiazine (MePhtz) et un électrolyte tel que du tetra-*n*-butylammonium tetrafluoroborate (TBA BF₄⁻).

Ainsi, chaque couche transparente 4, 5 comprend une face interne 4a, 5a et une face externe 4b, 5b.

On désigne ainsi plus particulièrement par « interne » les faces 4a, 5a délimitant la cavité 6 de la cellule 3, et par « externe » les faces 4b, 5b extérieures à la cavité 6. La cavité 6 a ainsi une épaisseur e comprise entre les deux faces internes 4a, 5a.

Les couches transparentes 4, 5 peuvent être des couches en matériau organique ou minéral. Les couches transparentes 4, 5 peuvent également être choisies pour filtrer les rayonnements ultraviolets, notamment pour absorber les longueurs d'onde inférieure à 420 nm par exemple. De façon générale, le matériau des couches transparentes 4, 5, ou le traitement de leurs faces internes 4a, 5a et/ou externes 4b, 5b, peut permettre aux couches transparentes 4, 5 d'avoir des caractéristiques avantageuses, tels que de permettre des reflets colorés, un effet miroir, une protection vis-à-vis de la lumière bleue ou une protection vis-à-vis des infrarouges, sans que cette liste soit limitative. Selon une réalisation, les couches transparentes 4,5 peuvent être colorées, photochromiques ou/et polarisées. Selon une réalisation, les couches transparentes 4, 5 peuvent être en un matériau trempé de sorte à augmenter leurs résistances mécaniques.

De préférence, les couches transparentes 4,5 ont une épaisseur comprise entre 50 micromètres et 2000 micromètres, voire entre 300 micromètres et 1000 micromètres.

Les couches transparentes 4, 5 peuvent par exemple être des coques sphériques, et ont notamment une forme sphéroïde ou ovoïde délimitée par un bord périphérique 8. En particulier, les couches transparentes 4, 5 sont de préférence des lentilles ophtalmiques respectant, avec la composition électrochrome 7 de la cavité 6, une prescription ophtalmique d'un porteur du dispositif ophtalmique 1.

Selon l'invention, au moins une face interne 4a, 5a, en particulier les deux faces internes 4a, 5a, des couches transparentes 4, 5 sont incurvées, c'est-à-dire qu'elles ont une courbure non nulle. Par exemple, les faces internes 4a, 5a des couches transparentes 4, 5 peuvent chacune être concaves ou convexes. En outre, les faces externes 4b, 5b des couches transparentes 4, 5 peuvent également être incurvées, et en particulier être concaves ou convexes.

La face interne 4a, 5a de chacune des couches transparentes 4, 5 est au moins partiellement, et de préférence complètement, recouverte par un revêtement électroconducteur 9, 10. Le revêtement électroconducteur 9, 10 peut par exemple être formé d'un matériau conducteur transparent organique ou minéral, par exemple un oxyde conducteur transparent (*transparent conductive oxide*, TCO). De préférence, on utilise l'oxyde d'indium dopé à l'étain (*indium tin oxide*, ITO). Le revêtement électroconducteur 9, 10 peut également être formé d'un matériau IMI (ITO, métal, ITO), GZO, AZO, FTO, SWNT (nano tube de carbones), graphène, fils d'argent ou PEDOT.

La cellule 3, et notamment les deux couches transparentes 4, 5, sont maintenues entre elles par un joint de scellement périphérique 11. Le joint de scellement 11 entoure ainsi complètement la cavité 6. Le joint de scellement 11 permet d'assurer une épaisseur e suffisante de la cellule 3, ainsi qu'une absence de contact direct entre les revêtements électroconducteurs 9, 10 de chacune des couches transparentes 4, 5.

Le joint de scellement 11 a une hauteur h, notamment après assemblage de la cellule 3, comprise entre quelques dizaines de micromètres et quelques centaines de micromètres, de préférence entre 40 micromètres et 200 micromètres, voire plus précisément entre 80 micromètres et 160 micromètres, voire encore plus précisément entre 90 et 150 micromètres. A titre d'exemple, la hauteur h du joint de scellement 11 peut être égale à environ 110 micromètres. Cette hauteur h correspond à l'épaisseur e de la cavité 6 à proximité des bords périphériques 8 des couches transparentes 4, 5, notamment des bords périphériques des faces internes 4a, 5a.

Plus précisément, la hauteur h du joint de scellement 11 tel que représenté sur la figure 2B correspond à un joint de scellement 11 qui n'est pas déposé sur des éléments de connexion 9, 10 comme cela sera décrit ci-après. Cependant, dans une réalisation dans laquelle le joint de scellement 11 est déposé, notamment partiellement, sur des éléments de connexion 9, 10, la hauteur h correspond à la hauteur du joint de scellement 11 et à la hauteur des éléments de connexion 9, 10 pris ensemble.

En outre, la largeur L du joint de scellement 11 est de préférence inférieure à 1000 micromètres, voire inférieure à 800 micromètres. Ainsi, lorsque le dispositif ophtalmique sera installé dans une monture, le joint de scellement ne sera pas apparent et ne limitera pas le champ visuel du porteur ni la surface utile du dispositif ophtalmique.

On désigne par « largeur », la taille d'un élément s'étendant dans un plan sensiblement parallèle aux faces internes 4a, 5a des couches transparentes 4, 5. On désigne par « hauteur » ou « épaisseur », la taille d'un élément s'étendant selon une direction sensiblement transversale aux faces internes 4a, 5a des couches transparentes 4, 5.

Le joint de scellement 11 est réalisé à partir d'un matériau adhésif 20 qui maintient la cohésion entre les deux couches transparentes 4, 5.

Selon une réalisation, le matériau adhésif 20 peut être une colle acrylate, méthacrylate, cyanoacrylate, époxyde, polyuréthane, silicone. De préférence, le matériau adhésif 20 est notamment une colle époxy cationique, époxy- aminés, époxy-anhydrides, silicone oxime
Le matériau adhésif 20 est de préférence une résine polymérisable à la lumière et/ou thermiquement. Le matériau adhésif 20 est notamment une résine époxy à amorçage cationique. Une telle résine peut être réticulée par exposition à la lumière et/ou par chauffage thermique comme cela sera décrit par la suite. Une résine époxy chargée, une fois réticulée, permet d'obtenir un joint de scellement 11 ayant une bonne résistance mécanique. En outre, le joint de scellement 11 ainsi obtenu est étanche à l'eau et à l'air.

Selon une réalisation, le matériau adhésif 20 est compatible, ou inerte vis-à-vis de la composition électrochrome 7, c'est-à-dire n'induit pas d'interaction chimique ou de dégradation de la composition électrochrome 7.

Selon une réalisation, le matériau adhésif 20 comprend des éléments d'espacement 12, tels que des billes de verre ou des billes de polymère. Les éléments d'espacement 12 sont électriquement isolants. En particulier, les éléments d'espacement 12 du matériau adhésif 20 sont en contact avec chacune des faces internes 4a, 5a des couches transparentes. Les éléments d'espacement 12 permettent ainsi de définir et de maitriser la hauteur h du joint de scellement 11 et donc d'obtenir une épaisseur e suffisante de la cavité 6.

Selon une réalisation, le matériau adhésif 20 comprend également un agent thixotropant. Un tel agent thixotropant permet d'optimiser la forme du joint de scellement 11 en contrôlant la quantité de matériau adhésif 20 déposé sur une des couches transparentes 4,5.

L'agent thixotropant permet notamment d'obtenir un rapport satisfaisant entre la hauteur h et la largeur L du joint de scellement 11. Il est ainsi possible d'obtenir une cavité 6 ayant une épaisseur e suffisante, tout en minimisant la largeur L du joint de scellement 11. Cela permet d'éviter un effet de bord, c'est-à-dire un étalement local du matériau adhésif 20 lors de son dépôt sur la couche transparente, qui entrainerait une augmentation significative de la largeur L du joint de scellement 11. Comme représenté par exemple sur la figure 2B, le joint de scellement s'étend perpendiculairement aux faces internes 4a, 5a des couches transparentes 4, 5.

De plus l'agent thixotropant permet de déposer le joint de scellement sur des surfaces incurvées tout en contrôlant le rapport entre la hauteur h et la largeur L du joint de scellement. Ainsi, la section du joint de scellement (hauteur h et largeur L) demeure sensiblement constante, même si le joint de scellement est déposé selon une ligne complexe sur une surface courbe, car le contrôle de la rhéologie du joint évite que ce dernier s'étale ou s'affaisse et ne conduise à des défauts d'étanchéité ou esthétique.

Les revêtements électroconducteurs 9, 10 de chacune des couches transparentes 4, 5 forment des électrodes qui ne sont pas en contact direct l'une avec l'autre et sont destinés à être connectés électriquement à une source électrique externe 13, telle qu'une batterie telle que représentée sur la figure 1.

A cet effet, un élément de connexion 14, 15 (également appelé « bus »), notamment métallique peut être disposé en périphérie de chacune des couches transparente 4, 5, en contact direct avec chaque revêtement conducteur 9, 10. Chacun des éléments de connexion 14, 15 entoure partiellement, et notamment complètement, chaque couche transparente 4, 5 au niveau de son bord périphérique 8, et notamment de la tranche de la cellule 3. Chacun des éléments de connexion 14, 15 est notamment disposé au niveau du bord périphérique 8 de chacune des couches transparente 4, 5, en formant en particulier une équipotentiel autour de chacune des couches transparente 4, 5. Les éléments de connexion 14, 15 sont par exemple réalisés en cuivre, en or, en argent ou en nickel. De préférence, les éléments de connexion 14, 15 sont passivés pour ne pas interagir avec la composition électrochrome 7 et afin de prévenir leur corrosion.

Chacun des éléments de connexion 14, 15 est disposé à l'extérieur de la cavité 6 formée par la cellule 3, et n'est donc pas en contact avec la composition électrochrome 7 remplissant la cavité 6. En variante, le joint de scellement 11 peut recouvrir, au moins partiellement, les éléments de connexion 14, 15.

Le joint de scellement 11 est disposé entre la cavité 6 et chacun des éléments de connexion 14, 15. Autrement dit, la circonférence du joint de scellement 11 est inférieure à la circonférence de chaque élément de connexion 14, 15. Chacun des éléments de connexion 14, 15 est ainsi isolé, notamment électriquement, de la composition électrochrome 7, ceci afin d'éviter tout disfonctionnement local de la cellule 3.

Chaque élément de connexion 14, 15 a de préférence une largeur comprise entre 500 micromètre et 800 micromètres. Chaque élément de connexion 14, 15 a en outre de préférence une hauteur comprise entre 0,5 micromètres et 30 micromètres, préférentiellement entre 1 et 15 micromètres, encore plus préférentiellement entre 1 et 5 micromètres. L'épaisseur totale des deux éléments de connexion 14, 15 est nécessairement inférieure à l'épaisseur e de la cellule 3, de sorte que ces deux éléments de connexion 14 et 15 ne sont pas en contact l'un avec l'autre.

Afin d'assurer le fonctionnement électrique de la cellule 3, chaque élément de connexion 14, 15 est relié électriquement à un circuit de commande 16. Le circuit de commande 16 est par exemple une carte électronique miniaturisée de pilotage équipée d'un microcontrôleur qui permet de piloter l'allumage, l'extinction et/ou le niveau de transmission de la cellule 3.

Selon une réalisation représentée par exemple sur la figure 4, le circuit de commande 16 est disposé directement entre les deux éléments de connexion 14, 15. Le joint de scellement 11 n'est alors pas de contact avec ce circuit de commande 16 et n'interfère pas avec celui-ci. Le circuit de commande 16 comprend également deux faces16a, 16b, chacune des faces 16a, 16b étant reliée électriquement, notamment en contact direct ou à l'aide d'une colle conductrice ou d'un adhésif conducteur, avec un élément de connexion 14, 15. Selon cette réalisation, la hauteur du circuit de commande 16 entre ses deux faces16a, 16b, est alors égale à l'épaisseur e de la cavité de la cellule 3 à l'épaisseur des éléments de connexion 14, 15 près.

Selon une autre réalisation telle que représentée sur la figure 3, le circuit de commande 16 n'est pas directement disposé entre les deux éléments de connexion 14, 15. Le dispositif ophtalmique 1 comprend alors un élément intermédiaire conducteur 17 (également appelé «flex»). L'élément intermédiaire conducteur 17 est de préférence positionné du côté nasal ou temporal de la monture 2 du dispositif ophtalmique 1 comme représenté sur la figure 1.

Selon cette réalisation, l'élément intermédiaire conducteur 17 est connecté électriquement à une première extrémité 17a à chacun des éléments de connexion 14, 15 de façon indépendante. L'élément intermédiaire conducteur 17 peut être en contact avec une surface relativement étendue de chacun des éléments de connexion 9, 10. Selon cette réalisation, l'élément intermédiaire conducteur 17 peut par exemple partiellement épouser la forme du bord périphérique 8 des couches transparentes 4, 5 afin de faciliter son assemblage avec la cellule 3.

L'élément intermédiaire conducteur 17 peut ainsi entourer partiellement ou complètement le bord périphérique 8 de chacune des couches transparentes 4, 5. Selon cette réalisation dans lequel l'élément intermédiaire conducteur 17 entoure complètement les bords périphériques 8 des couches transparentes 4, 5, il n'est alors pas nécessaire que la cellule 3 comprennent des éléments de connexion 14, 15, l'élément intermédiaire conducteur 17 faisant office d'éléments de connexion 14, 15.

Ainsi, en variante, la cellule 3 peut ne pas comprendre d'éléments de connexion 14, 15, notamment lorsque les revêtements 9, 10 décrits précédemment sont réalisés dans un matériau suffisamment conducteur.

L'élément intermédiaire conducteur 17 est également connecté électriquement à une seconde extrémité 17b au circuit de commande 16 pour permettre de commander le fonctionnement de la cellule 3.

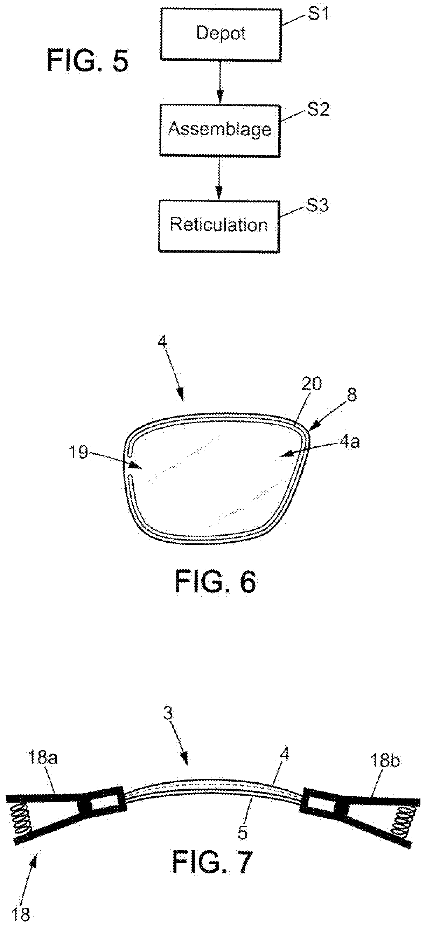

On décrit ci-après le procédé d'assemblage d'une cellule 3 selon l'invention représenté schématiquement sur la figure 5.

On dispose tout d'abord des deux couches transparentes 4, 5 respectivement recouvertes sur leurs faces internes 4a, 5a par un revêtement électroconducteur 9, 10.

Les éléments de connexion 14 et 15 peuvent également être préalablement déposés, par exemple par évaporation ou par galvanoplastie, sur les couches transparentes 4, 5, et notamment sur les revêtements électroconducteurs 9, 10.

Dans une première étape de dépôt S1, on dépose un matériau adhésif 20 réticulable sur une couche transparente 4, notamment sur le revêtement conducteur 9 de sa face interne 4a. Le matériau adhésif 20 est déposé à la périphérie d'une des couches transparentes 4, 5, notamment au voisinage du bord périphérique 8 d'une des couches transparentes 4, 5. Le matériau adhésif 20, notamment le joint de scellement 11, n'est alors pas visible lorsque la cellule 3 est montée dans une monture, comme représentée sur la figure 1.

Comme représenté sur la figure 6, le matériau adhésif 20 est plus particulièrement déposé partiellement sur la périphérie de la face interne 4a d'une des couches transparentes 4 de sorte à former, une fois la cellule 3 assemblée, au moins une ouverture de remplissage 19 dans le matériau adhésif 20 débouchant dans la cavité 6. L'ouverture de remplissage 19 est située à la périphérie, et notamment sur la tranche de la cellule 3, afin de ne pas impacter l'esthétisme du dispositif 1.

Le matériau adhésif 20 est de préférence déposé de façon volumétrique, par exemple avec une pompe à cavité progressive, telle qu'une pompe dite « Moineau ». La hauteur h du joint de scellement 11 étant déterminée par la hauteur des éléments d'espacement 12, il est possible de déterminer la largeur L du joint de scellement 11 en contrôlant le volume de matériau adhésif 20 ainsi déposé et la vitesse de déplacement relative entre la pompe et la couche transparente 4 ou 5 sur laquelle est déposée le matériau adhésif 20.

Selon une réalisation, l'étape de dépôt S1 du matériau adhésif 20 est réalisée de façon automatique, par exemple par un système de positionnement multiaxes, notamment un robot 3-axes (non représenté sur les figures) qui suit notamment la courbure des surfaces, et notamment la courbure de la face interne 4a, 5a sur laquelle est déposée le matériau adhésif 20.

Le matériau adhésif 20 est de préférence déposé sur le revêtement conducteur 9, 10 recouvrant la face interne 4a, 5a d'une seule des deux couches transparentes 4, 5. De façon alternative, on peut prévoir de déposer le matériau adhésif 20 sur chacun des revêtements conducteurs 9, 10 des deux couches transparentes 4, 5.

Alternativement à l'étape de dépôt S1 décrite ci-dessus, on peut utiliser un film de résine adhésive chargée, par exemple de résine époxy chargée, pour déposer le matériau adhésif 20 sur une couche transparente 4. Le film est au préalable découpé à la bonne géométrie, notamment par laser, pour former une bande de matériau adhésif 20. La bande de matériau adhésif 20 est ensuite déposée précisément à la périphérie d'une des couches transparentes 4, 5, notamment au voisinage du bord périphérique 8 d'une des couches transparentes 4, 5.

Dans une deuxième étape d'assemblage S2, on assemble les deux couches transparentes 4, 5, les faces internes 4a, 5a des deux couches transparentes 4, 5 étant disposées en regard l'une de l'autre afin de former entre elle la cavité 6 destinée à être remplie de la composition électrochrome 7. Cette étape d'assemblage peut être réalisée de façon manuelle ou automatique.

Lors de cette étape d'assemblage S2, on dispose l'élément intermédiaire conducteur 17 dans la cellule 3 le cas échéant.

Comme représentée sur la figure 7, la cellule 3 est alors maintenue par un dispositif de maintien 18. A titre d'exemple, le dispositif de maintien 18 peut comprendre une pluralité de serre-joints 18a, 18b en contact avec les faces externes 4b, 5b des deux couches transparentes 4, 5. Il est également possible d'utiliser un outil sphérique pleine surface pour assurer un effort en compression entre les deux couches transparentes 4, 5. De façon générale, il est possible d'utiliser tout dispositif permettant de maintenir entre elles deux couches transparentes 4, 5 ainsi assemblées.

Dans une troisième étape de réticulation S3, on réticule le matériau adhésif 20.

Dans une phase d'amorçage, le matériau adhésif 20 est tout d'abord soumis à un traitement par exposition à la lumière, ou traitement photonique. On soumet de préférence le matériau adhésif 20 à un traitement par ultraviolet. Alternativement, on soumet de préférence le matériau adhésif 20 à un traitement par lumière visible. Le matériau adhésif 20 est alors figé, les éléments d'espacement 12 étant alors fixes dans le matériau adhésif 20. On peut alors retirer le dispositif de maintien 18.

Dans une phase de propagation faisant suite à l'exposition à la lumière du matériau adhésif 20, on réticule également le matériau adhésif 20 en le soumettant à un traitement thermique. A cet effet, la cellule 3, avantageusement maintenue par le dispositif de maintien 18, est placée dans un four, par exemple à une température comprise entre 60 et 180 degrés Celsius pendant une durée comprise entre quelques minutes et quelques heures, par exemple à 110 ou 120 degrés Celsius pendant une durée égale à environ 30 ou 60 minutes.

Cette étape de réticulation, par exposition à la lumière puis par traitement thermique, permet d'éviter l'apparition d'effet de bord. En effet, de tels effets de bord seraient en effet susceptibles d'apparaitre si le matériau adhésif 20 était uniquement soumis par exemple à un traitement thermique.

Le matériau adhésif 20 ainsi réticulé forme le joint de scellement 11.

La cavité 6 est alors remplie avec la composition électrochrome 7 par l'ouverture de remplissage 19 formée dans le joint de scellement 11. La cavité 6 est remplie par la composition électrochrome 7 par exemple par mise sous vide, par effet de capillarité ou par injection. Dans le cas d'un remplissage par effet de capillarité ou par injection, le matériau adhésif 20 comprend alors au moins deux ouvertures de remplissage 19, notamment afin de permettre l'évacuation de l'air de la cavité 6 lors de son remplissage.

Après remplissage, l'ouverture de remplissage 19 est rebouchée avec une colle, par exemple une colle silicone mono ou bi-composant. La colle silicone est choisie pour être inerte vis-à-vis de la composition électrochrome.

On remet ensuite de préférence un matériau adhésif 20 tel que celui utilisé pour former le joint de scellement 11 sur la colle silicone pour assurer l'étanchéité du joint de scellement 11, notamment à l'air. En variante, un matériau adhésif différent du matériau adhésif 20 formant le joint de scellement périphérique 11 peut également être utilisé.

Selon une variante, on n'utilise pas d'ouverture de remplissage 19 formée dans le joint de scellement 11 pour remplir la cavité 6. Selon cette variante, la cellule 3 a préalablement été remplie par un procédé dit de « one drop filling ». Selon ce procédé, des gouttes de composition électrochrome 7 en volume contrôlé sont réparties de manière homogène sur la face interne 4a de la couche transparente 4 à l'intérieur de la cavité 6 préalablement à l'étape d'assemblage S2 et après l'étape S1 de dépôt du matériau adhésif 20. Ainsi, lors de l'assemblage, la cavité 6 de la cellule 3 est déjà remplie par la composition électrochrome 7.

On obtient ainsi la cellule 3 assemblée finale.

Grâce au procédé d'assemblage, on obtient un joint de scellement 11 ayant une largeur L suffisamment faible pour ne pas entrer dans le champ utile de la cellule et être visible par un utilisateur.

La hauteur h du joint de scellement 11, et donc l'épaisseur e de la cavité 6, peuvent également être contrôlées.

L'épaisseur e peut notamment être constante dans toute la cavité 6. En variante, du fait de la courbure différente des faces internes 4a, 5a, l'épaisseur e de la cavité 6 peut également varier au sein de la cavité 6. Par exemple, la variation de l'épaisseur e de la cavité 6 est inférieure à 10% de l'épaisseur maximale emax de la cavité 6 de la cellule 3.

Ainsi, l'épaisseur e de la cellule 3 peut par exemple être supérieure au centre de la cellule 3 qu'à sa périphérie. Il est alors possible de compenser une faible conductivité des revêtements électroconducteurs 9, 10. Selon un autre exemple, l'épaisseur e de la cellule 3 peut varier en hauteur dans la cellule 3 afin de réaliser un gradient de transmission de la cellule 3.

Bien évidemment, l'invention n'est pas limitée aux modes de réalisation décrits précédemment et fournis uniquement à titre d'exemple. Son étendue est définie par les revendications et elle englobe diverses modifications, formes alternatives et autres variantes couvertes par les revendications et que pourra envisager l'homme du métier dans le cadre de la présente invention et notamment toutes combinaisons des différents modes de fonctionnement décrits précédemment, pouvant être pris séparément ou en association.

## Revendications

1. Dispositif ophtalmique (1) comportant une cellule électrochrome (3) comprenant au moins deux couches transparentes (4, 5) ayant des faces internes (4a, 5a) incurvées et délimitant entre elles une cavité (6) fermée remplie par une composition électrochrome (7), la cavité (6) étant délimitée en périphérie par un joint de scellement (11) formé à partir d'un matériau adhésif (20), le joint de scellement étant adapté à maintenir les deux couches transparentes (4,5) assemblées l'une avec l'autre; le dispositif ophtalmique étant **caractérisé en ce que** le joint de scellement (11) a une largeur inférieure à 1000 micromètres.

2. Dispositif (1) selon la revendication précédente, dans lequel les couches transparentes (4, 5) sont des lentilles ophtalmiques respectant, avec la composition électrochrome (7) de la cavité (6), une prescription ophtalmique d'un porteur du dispositif (1).

3. Dispositif (1) selon l'une quelconque des revendications précédentes, dans lequel le joint de scellement (11) a une hauteur (h) comprise entre 40 micromètres et 200 micromètres.

4. Dispositif (1) selon l'une quelconque des revendications précédentes, dans lequel le joint de scellement (11) est réalisé avec une résine époxy à amorçage cationique.

5. Dispositif (1) selon l'une quelconque des revendications précédentes, dans lequel le joint de scellement (11) contient des éléments d'espacement (12) adaptés pour assurer un écartement entre les deux couches transparentes (4, 5) assemblées par le joint de scellement (11) et formant la cavité (6).

6. Dispositif (1) selon l'une quelconque des revendications précédentes, dans lequel la cavité (6) a une épaisseur (e) constante entre les deux faces internes (4a, 5a) des couches transparentes (4, 5).

7. Dispositif (1) selon l'une quelconque des revendications 1 à 5, dans lequel la cavité (6) a une épaisseur (e) variable entre les deux faces internes (4a, 5a) des couches transparentes (4, 5).

8. Dispositif (1) selon l'une quelconque des revendications précédentes, dans lequel les faces internes (4a, 5a) des couches transparentes (4, 5) sont chacune intégralement recouverte par un revêtement conducteur (9, 10).

9. Dispositif (1) selon la revendication précédente, dans lequel le revêtement conducteur (9, 10) de chacune des faces internes (4a, 5a) est réalisé en oxyde d'indium dopé à l'étain (ITO).

10. Dispositif (1) selon l'une des revendications 8 ou 9, dans lequel un élément de connexion (14, 15) est disposé en périphérie tout autour de chacune des couches transparentes (4, 5) et relié électriquement à chacun des revêtements conducteurs (9, 10), le joint de scellement (11) étant disposé de façon à isoler de façon étanche chacun des éléments de connexion (14, 15) de la cavité (6).

11. Dispositif (1) selon la revendication 10, comportant un circuit de commande (16) disposé entre les éléments de connexion (14,15) et relié électriquement à chacun des éléments de connexion (14,15), le joint de scellement (11) étant disposé de façon à isoler de façon étanche le circuit de commande (16) de la cavité (6).

12. Dispositif (1) selon la revendication 10, comportant un élément intermédiaire conducteur (17) comprenant une première extrémité (17a) disposée en périphérie de la cellule (3) et reliée électriquement à chacun des éléments de connexion (14,15), l'élément intermédiaire conducteur (17) comprenant une deuxième extrémité (17b) reliée électriquement à un circuit de commande (16), le joint de scellement (11) étant disposé de façon à isoler de façon étanche l'élément intermédiaire conducteur (17) de la cavité (6).

13. Procédé d'assemblage d'une cellule électrochrome (3) d'un dispositif ophtalmique (1), comprenant deux couches transparentes (4, 5), les couches transparentes (4, 5) comprenant des face internes (4a, 5a) incurvées délimitant entre elles une cavité (6) fermée remplie par une composition électrochrome (7), la cavité (6) étant délimitée en périphérie par un joint de scellement (11) formé à partir d'un matériau adhésif (20), le joint de scellement (11) ayant une largeur inférieure à 1000 micromètres et étant adapté pour maintenir les deux couches transparentes (4, 5) assemblées l'une avec l'autre, le procédé comprenant les étapes consistant à :
- déposer un matériau adhésif (20) sur la périphérie de la face interne incurvée (4a, 5a) d'une des couches transparentes (4, 5) ;
- assembler les faces internes (4a, 5a) des deux couches transparentes (4, 5) au moyen d'un dispositif de maintien (18) de sorte à former la cavité (6) ; et
- réticuler le matériau adhésif (20) par un traitement par exposition à la lumière et/ou par un traitement thermique afin de former le joint de scellement (11).

14. Procédé d'assemblage selon la revendication 13, dans lequel le traitement par exposition à la lumière est un traitement à la lumière visible ou ultraviolette.

15. Procédé d'assemblage selon la revendication 13 ou 14, dans lequel :
- dans l'étape de dépôt, le matériau adhésif (20) est déposé partiellement sur la périphérie de la face interne (4a, 5a) d'une des couches transparentes (4, 5) de sorte à former, une fois les faces internes (4a, 5a) des deux couches transparentes (4, 5) assemblées, au moins une ouverture de remplissage (19) dans le matériau adhésif (20) débouchant dans la cavité (6) ;
- après assemblage des faces internes (4a, 5a) des deux couches transparentes (4, 5), la cavité (6) est remplie avec la composition électrochrome (7) par l'ouverture de remplissage (19) ; et
- après remplissage, l'ouverture de remplissage (19) est bouchée puis recouverte avec le matériau adhésif (20) formant le joint de scellement (11).

## Patentansprüche

1. Ophthalmische Vorrichtung (1) aufweisend eine elektrochrome Zelle (3) umfassend mindestens zwei transparente Schichten (4, 5), die gekrümmte Innenflächen (4a, 5a) aufweisen und zwischen ihnen einen geschlossenen Hohlraum (6) begrenzen, der mit einer elektrochromen Zusammensetzung (7) gefüllt ist, wobei der Hohlraum (6) am Rand durch eine Versiegelungsdichtung (11) begrenzt ist, die aus einem Haftmaterial (20) gebildet ist, wobei die Versiegelungsdichtung geeignet ist, die zwei transparenten Schichten (4, 5) miteinander zusammengefügt zu halten; wobei die ophthalmische Vorrichtung **dadurch gekennzeichnet ist, dass** die Versiegelungsdichtung (11) eine Breite unter 1000 Mikrometern aufweist.

2. Vorrichtung (1) nach dem vorhergehenden Anspruch, wobei die transparenten Schichten (4, 5) ophthalmische Linsen sind, sie mit der elektrochromen Zusammensetzung (7) des Hohlraums (6) einer ophthalmischen Verordnung eines Trägers der Vorrichtung (1) entsprechen.

3. Vorrichtung (1) nach einem der vorhergehenden Ansprüche, wobei die Versiegelungsdichtung (11) eine Höhe (h) zwischen 40 Mikrometern und 200 Mikrometern aufweist.

4. Vorrichtung (1) nach einem der vorhergehenden Ansprüche, wobei die Versiegelungsdichtung (11) mit einem Epoxidharz mit kationischer Initiation hergestellt ist.

5. Vorrichtung (1) nach einem der vorhergehenden Ansprüche, wobei die Versiegelungsdichtung (11) Abstandselemente (12) enthält, die geeignet sind, einen Abstand zwischen den zwei transparenten Schichten (4, 5) sicherzustellen, die durch die Versiegelungsdichtung (11) zusammengefügt sind und den Hohlraum (6) bilden.

6. Vorrichtung (1) nach einem der vorhergehenden Ansprüche, wobei der Hohlraum (6) eine konstante Dicke (e) zwischen den zwei Innenflächen (4a, 5a) der transparenten Schichten (4, 5) aufweist.

7. Vorrichtung (1) nach einem der Ansprüche 1 bis 5, wobei der Hohlraum (6) eine variable Dicke (e) zwischen den zwei Innenflächen (4a, 5a) der transparenten Schichten (4, 5) aufweist.

8. Vorrichtung (1) nach einem der vorhergehenden Ansprüche, wobei die Innenflächen (4a, 5a) der transparenten Schichten (4, 5) jeweils vollständig mit einer leitenden Beschichtung (9, 10) bedeckt sind.

9. Vorrichtung (1) nach dem vorhergehenden Anspruch, wobei die leitende Beschichtung (9, 10) jeder der Innenflächen (4a, 5a) aus mit Zinn dotiertem Indiumoxid (ITO) hergestellt ist.

10. Vorrichtung (1) nach einem der Ansprüche 8 oder 9, wobei ein Verbindungselement (14, 15) am Rand um jede der transparenten Schichten (4, 5) herum angeordnet und elektrisch mit jeder der leitenden Beschichtungen (9, 10) verbunden ist, wobei die Versiegelungsdichtung (11) so angeordnet ist, dass sie jedes der Verbindungselemente (14, 15) des Hohlraums (6) dichtend isoliert.

11. Vorrichtung (1) nach Anspruch 10, aufweisend eine Steuerschaltung (16), die zwischen den Verbindungselementen (14, 15) angeordnet und elektrisch mit jedem der Verbindungselemente (14, 15) verbunden ist, wobei die Versiegelungsdichtung (11) so angeordnet ist, dass sie die Steuerschaltung (16) des Hohlraums (6) dichtend isoliert.

12. Vorrichtung (1) nach Anspruch 10, aufweisend ein leitendes Zwischenelement (17) umfassend ein erstes Ende (17a), das am Rand der Zelle (3) angeordnet und elektrisch mit jedem der Verbindungselemente (14, 15) verbunden ist, das leitende Zwischenelement (17) umfassend ein zweites Ende (17b), das elektrisch mit einer Steuerschaltung (16) verbunden ist, wobei die Versiegelungsdichtung (11) so angeordnet ist, dass sie das leitende Zwischenelement (17) des Hohlraums (6) dichtend isoliert.

13. Verfahren zur Zusammenfügung einer elektrochromen Zelle (3) einer ophthalmischen Vorrichtung (1), umfassend zwei transparente Schichten (4, 5), die transparenten Schichten (4, 5) umfassend gekrümmte Innenflächen (4a, 5a), die zwischen ihnen einen geschlossenen Hohlraum (6) begrenzen, der mit einer elektrochromen Zusammensetzung (7) gefüllt ist, wobei der Hohlraum (6) am Rand durch eine Versiegelungsdichtung (11) begrenzt ist, die aus einem Haftmaterial (20) gebildet ist, wobei die Versiegelungsdichtung (11) eine Breite unter 1000 Mikrometern aufweist und geeignet ist, die zwei transparenten Schichten (4, 5) miteinander zusammengefügt zu halten, das Verfahren umfassend die Schritte, die aus Folgendem bestehen:
- Abscheiden eines Haftmaterials (20) auf dem Rand der gekrümmten Innenfläche (4a, 5a) einer der transparenten Schichten (4, 5);
- Zusammenfügen der Innenflächen (4a, 5a) der zwei transparenten Schichten (4, 5) mittels einer Haltevorrichtung (18), um den Hohlraum (6) zu bilden; und
- Vernetzen des Haftmaterials (20) durch eine Belichtungs- und/oder Wärmebehandlung, um die Versiegelungsdichtung (11) zu bilden.

14. Verfahren zur Zusammenfügung nach Anspruch 13, wobei die Belichtungsbehandlung eine Behandlung mit sichtbarem oder ultraviolettem Licht ist.

15. Verfahren zur Zusammenfügung nach Anspruch 13 oder 14, wobei:
- beim Schritt des Abscheidens das Haftmaterial (20) teilweise auf dem Rand der Innenfläche (4a, 5a) einer der transparenten Schichten (4, 5) abgeschieden wird, so dass, sobald die Innenflächen (4a, 5a) der zwei transparenten Schichten (4, 5) zusammengefügt sind, mindestens eine Befüllöffnung (19) im Haftmaterial (20) gebildet wird, die in den Hohlraum (6) mündet;
- nach der Zusammenfügung der Innenflächen (4a, 5a) der zwei transparenten Schichten (4, 5) der Hohlraum (6) durch die Befüllöffnung (19) mit der elektrochromen Zusammensetzung (7) befüllt wird; und
- nach den Befüllen die Befüllöffnung (19) verschlossen und dann mit dem Haftmaterial (20) bedeckt wird, das die Versiegelungsdichtung (11) bildet.

## Claims

1. Ophthalmic device (1) comprising an electrochromic cell (3) comprising at least two transparent layers (4, 5) having curved inner faces (4a, 5a) that delimit between them a sealed cavity (6) filled by an electrochromic composition (7), the cavity (6) being delimited at the periphery by a seal (11) formed from an adhesive material (20), the seal being suitable for supporting the two transparent layers (4, 5) assembled with one another; the ophthalmic device being **characterized in that** the seal (11) has a width of less than 1000 micrometres.

2. Device (1) according to the preceding claim, wherein the transparent layers (4, 5) are ophthalmic lenses that meet, with the electrochromic composition (7) of the cavity (6), an ophthalmic prescription of a wearer of the device (1).

3. Device (1) according to either one of the preceding claims, wherein the seal (11) has a height (h) of between 40 micrometres and 200 micrometres.

4. Device (1) according to any one of the preceding claims, wherein the seal (11) is made with a cationically initiated epoxy resin.

5. Device (1) according to any one of the preceding claims, wherein the seal (11) contains spacing elements (12) suitable for ensuring a gap between the two transparent layers (4, 5) assembled by the seal (11) and forming the cavity (6).

6. Device (1) according to any one of the preceding claims, wherein the cavity (6) has a constant thickness (e) between the two inner faces (4a, 5a) of the transparent layers (4, 5).

7. Device (1) according to any one of Claims 1 to 5, wherein the cavity (6) has a variable thickness (e) between the two inner faces (4a, 5a) of the transparent layers (4, 5).

8. Device (1) according to any one of the preceding claims, wherein the inner faces (4a, 5a) of the transparent layers (4, 5) are each completely covered by a conductive coating (9, 10).

9. Device (1) according to the preceding claim, wherein the conductive coating (9, 10) of each of the inner faces (4a, 5a) is made of indium tin oxide (ITO).

10. Device (1) according to either of Claims 8 and 9, wherein a connecting element (14, 15) is positioned at the periphery all around each of the transparent layers (4, 5) and electrically connected to each of the conductive coatings (9, 10), the seal (11) being positioned so as to isolate each of the connecting elements (14, 15) from the cavity (6) in a leaktight manner.

11. Device (1) according to Claim 10, comprising a control circuit (16) positioned between the connecting elements (14, 15) and electrically connected to each of the connecting elements (14, 15), the seal (11) being positioned so as to isolate the control circuit (16) from the cavity (6) in a leaktight manner.

12. Device (1) according to Claim 10, comprising a conductive intermediate element (17) comprising a first end (17a) positioned at the periphery of the cell (3) and electrically connected to each of the connecting elements (14, 15), the conductive intermediate element (17) comprising a second end (17b) electrically connected to a control circuit (16), the seal (11) being positioned so as to isolate the conductive intermediate element (17) from the cavity (6) in a leaktight manner.

13. Process for assembling an electrochromic cell (3) of an ophthalmic device (1), comprising two transparent layers (4, 5), the transparent layers (4, 5) comprising curved inner faces (4a, 5a) that delimit between them a sealed cavity (6) filled by an electrochromic composition (7), the cavity (6) being delimited at the periphery by a seal (11) formed from an adhesive material (20), the seal (11) having a width of less than 1000 micrometres and being suitable for supporting the two transparent layers (4, 5) assembled with one another, the process comprising the steps consisting in:
- depositing an adhesive material (20) on the periphery of the curved inner face (4a, 5a) of one of the transparent layers (4, 5);
- assembling the inner faces (4a, 5a) of the two transparent layers (4, 5) by means of a support device (18) so as to form the cavity (6); and
- crosslinking the adhesive material (20) by an exposure to light treatment and/or by a heat treatment in order to form the seal (11).

14. Assembling process according to Claim 13, wherein the exposure to light treatment is a visible or ultraviolet light treatment.

15. Assembling process according to Claim 13 or 14, wherein:
- in the deposition step, the adhesive material (20) is deposited partially on the periphery of the inner face (4a, 5a) of one of the transparent layers (4, 5) so as to form, once the inner faces (4a, 5a) of the two transparent layers (4, 5) are assembled, at least one filling opening (19) in the adhesive material (20) that opens into the cavity (6);
- after assembling the inner faces (4a, 5a) of the two transparent layers (4, 5), the cavity (6) is filled with the electrochromic composition (7) through the filling opening (19); and
- after filling, the filling opening (19) is plugged then covered with the adhesive material (20) forming the seal (11).
